# EUROPEAN PATENT APPLICATION

(11) **EP 4 299 842 A1**
(43) Date of publication of application: **03.01.2024**
(21) Application number: 22759311.8
(22) Date of filing: 02.02.2022
(51) Int. Cl.: E02F 9/20, E02F 9/26

(54) **ELECTRIC WORK MACHINE**

(30) Priority: 24.02.2021 JP 2021027581
(71) Applicant: Yanmar Holdings Co., Ltd., Osaka-shi, Osaka, 530-0013 (JP)
(72) Inventor: KANEDA, Kensuke, Osaka-shi, Osaka 530-0013 (JP); ONITSUKA, Kosuke, Chikugo-shi, Fukuoka 833-0055 (JP)
(74) Representative: Dennemeyer & Associates S.A.
(86) International application number: PCT/JP2022/004037
(87) International publication number: WO 2022/181270

(57) **Abstract**

A hydraulic shovel to serve as this electric work machine comprises: an electric motor; a drive switch which detects an instruction to start up or stop the electric motor; a notification unit which provides notification about starting up the electric motor; a determination unit which, on the basis of an operating condition of the hydraulic shovel, determines whether or not the electric motor can be started up; and a notification control unit which controls the notification unit on the basis of a result of the determination by the determination unit. When the drive switch has detected an instruction to start up the electric motor, if the determination unit has determined that the electric motor can be started up, the notification control unit causes the notification unit to provide notification.

## Description

### TECHNICAL FIELD

The present invention relates to an electric work machine.

### BACKGROUND ART

Conventionally, an electric excavator that detects key turning positions by a key switch and starts an electric motor when a key is turned to a starting position (start position) of the electric motor is disclosed (see, for example, Patent Document 1).

### CITATION LIST

### Patent Literature

Patent Literature 1: Japanese Patent Unexamined Application Publication No. 2020-139350

### DISCLOSURE OF INVENTION

### PROBLEMS TO BE SOLVED BY THE INVENTION

Electric excavators driven by electric motors are quieter than excavators driven by engines. This is dangerous because an operator and workers around the electric excavator (hereinafter also referred to as "operator and others") may not notice starting of the electric motor when the electric motor is started. For this reason, when the electric motor is started, it is necessary to make the operator and others recognize the starting of the electric motor by some means.

On the other hand, depending on an operating state of the electric excavator, for example, when a cutoff switch is on as a cutoff lever is turned to a down position, the electric motor may be unable to be started in order to ensure safety. In this case, even if an instruction to start the electric motor is detected by the key switch, the electric motor is not started, so that it is unnecessary to make the operator and others recognize the starting of the electric motor. Therefore, it is desirable to make the operator and others recognize the starting of the electric motor only when the electric motor is able to be started. However, an electric excavator having such an effect has not yet been proposed in Patent Document 1 or the like.

The present invention was made to solve the above problem, the purpose of which is to provide an electric work machine that enables the operator and others to recognize the starting of the electric motor only when the electric motor is able to be started.

### MEANS FOR SOLVING THE PROBLEMS

An electric work machine according to one aspect of the present invention is an electric work machine having an electric motor, the electric work machine includes a drive switch that detects an instruction to start or stop the electric motor, a notification unit that makes a notification about starting of the electric motor, a determination unit that determines whether or not the electric motor is able to be started based on an operating state of the electric work machine, and a notification control unit that controls the notification unit based on a determination result of the determination unit. When the drive switch detects the instruction to start the electric motor, and in a case where the determination unit determines that the electric motor is able to be started, the notification control unit causes the notification unit to make the notification.

### EFFECT OF THE INVENTION

The above configuration enables the operator and others to recognize the starting of the electric motor only when the electric motor is able to be started.

### BRIEF DESCRIPTION OF DRAWINGS

FIG. 1 is a side view of a schematic configuration of a hydraulic excavator which is an example of an electric work machine according to an embodiment of the present invention.
FIG. 2 is a block diagram schematically illustrating a configuration of control and hydraulic systems of the hydraulic excavator.
FIG. 3 is a flowchart illustrating an operation flow when controlling a notification unit of the hydraulic excavator.
FIG. 4 is an explanatory diagram schematically illustrating an example of a display screen of a display unit when an electric motor of the hydraulic excavator is able to be started.
FIG. 5 is an explanatory diagram schematically illustrating an example of the display screen of the display unit when the electric motor is unable to be started.
FIG. 6 is an explanatory diagram illustrating an example of display screen transitions of the display unit.
FIG. 7 is an explanatory diagram illustrating another example of a display screen transition of the display unit.

### DESCRIPTION OF EMBODIMENTS

An embodiment of the present invention will be described as follows with reference to the accompanying drawings.

### [1. Electric Work Machine]

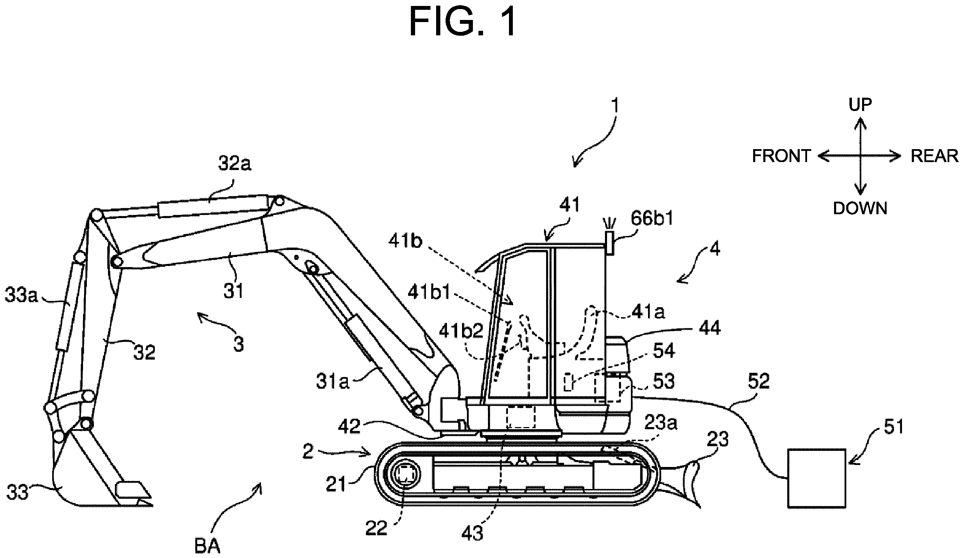

FIG. 1 is a side view of a schematic configuration of a hydraulic excavator 1, which constitutes an electric excavator, as an example of an electric work machine according to the present embodiment. The hydraulic excavator 1 includes a lower traveling body 2, a work machine 3, and an upper swivel body 4.

Herein, in FIG. 1, directions are defined as follows. First, a direction in which the lower traveling body 2 travels straight ahead is defined as a front-rear direction, one side in the front-rear direction is defined as "front", and another side in the front-rear direction is defined as "rear". In FIG. 1, a traveling motor 22 side relative to a blade 23 is illustrated as "front", as an example. A transverse direction perpendicular to the front-rear direction is defined as a left-right direction. In this case, a left side and a right side as viewed from an operator (manipulator, driver) seated on an operator's seat 41a are defined as "left" and "right" respectively. Further, a gravity direction perpendicular to the front-rear direction and the left-right direction is defined as an up-down direction, with an upstream side of the gravity direction defined as "up" and a downstream side defined as "down".

The lower traveling body 2 includes a pair of left and right crawlers 21 and a pair of left and right traveling motors 22. Each of the traveling motors 22 is a hydraulic motor. The left and right traveling motors 22 drive the left and right crawlers 21, respectively, to move the hydraulic excavator 1 forward and backward. The lower traveling body 2 is provided with the blade 23 for performing a ground leveling work and a blade cylinder 23a. The blade cylinder 23a is a hydraulic cylinder that turns the blade 23 in the up-down direction.

The work machine 3 includes a boom 31, an arm 32, and a bucket 33. The boom 31, the arm 32, and the bucket 33 can be independently driven to perform excavation work of earth, sand, etc.

The boom 31 is turned by a boom cylinder 31a. The boom cylinder 31a has a base end portion thereof supported by a front portion of the upper swivel body 4, and is freely movable in an extendable and retractable manner. The arm 32 is turned by an arm cylinder 32a. The arm cylinder 32a has a base end portion thereof supported by a tip portion of the boom 31, and is freely movable in an extendable and retractable manner. The bucket 33 is turned by a bucket cylinder 33a. The bucket cylinder 33a has a base end portion thereof supported by a tip portion of the arm 32, and is freely movable in an extendable and retractable manner. Each of the boom cylinder 31a, the arm cylinder 32a, and the bucket cylinder 33a includes a hydraulic cylinder.

The upper swivel body 4 is configured to be swivelable relative to the lower traveling body 2 via a swivel bearing (not illustrated). In the upper swivel body 4, a steering part 41, a swivel base 42, a swivel motor 43, an engine room 44, and the like are placed. Being driven with the swivel motor 43 as a hydraulic motor, the upper swivel body 4 swivels via the swivel bearing.

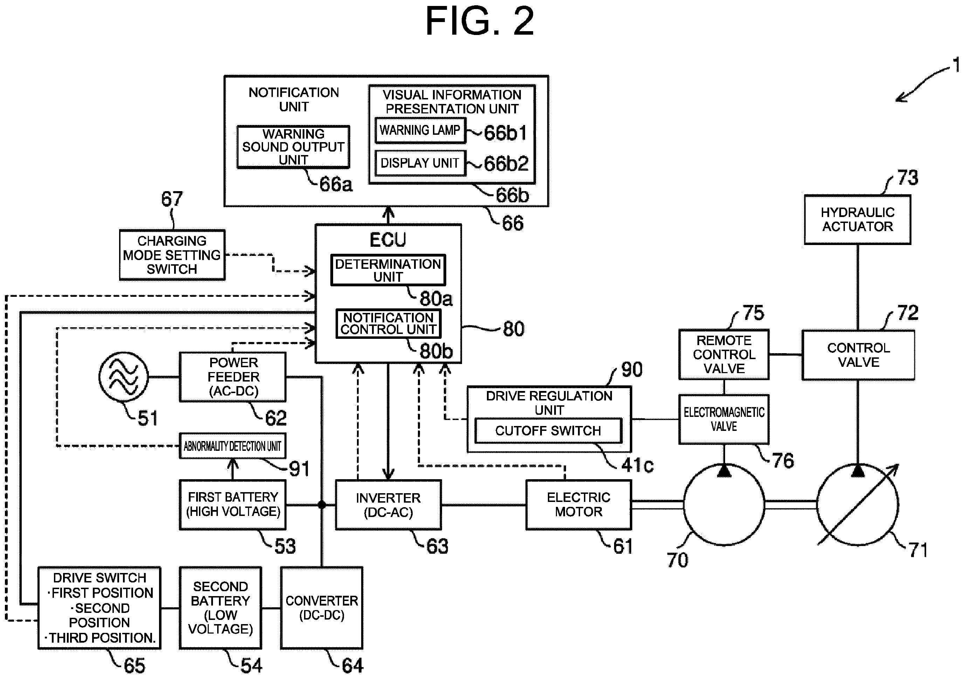

A plurality of hydraulic pumps 71 (see FIG. 2) is placed in the upper swivel body 4. Each of the hydraulic pumps 71 is driven by an electric motor 61 (see FIG. 2) inside the engine room 44. Each of the hydraulic pumps 71 supplies hydraulic oil (pressure oil) to the hydraulic motors (e.g., the left and right traveling motors 22 and the swivel motor 43) and the hydraulic cylinders (e.g., the blade cylinder 23a, the boom cylinder 31a, the arm cylinder 32a, the bucket cylinder 33a). The hydraulic motors and hydraulic cylinders that are driven with the hydraulic oil supplied from any of the hydraulic pumps 71 are collectively referred to as a hydraulic actuator 73 (see FIG. 2).

The operator's seat 41a is placed in the steering part 41. Various levers 41b are placed around the operator's seat 41a. The operator sits on the operator's seat 41a and operates the levers 41b, thereby to drive the hydraulic actuator 73. This enables the lower traveling body 2 to travel, the blade 23 to perform the ground leveling work, the work machine 3 to perform the excavation work, and the upper swivel body 4 to swivel, etc.

In particular, the levers 41b include a cutoff lever 41b2 as well as an operation lever 41b1 for driving the hydraulic actuator 73. The cutoff lever 41b2 is so provided on the left of the operator's seat 41a as to turn up and down. A turning position of the cutoff lever 41b2 is detected by a cutoff switch 41c (see FIG. 2). The cutoff switch 41c is placed at a base end portion of the cutoff lever 41b2.

When the operator presses down the cutoff lever 41b2, the cutoff switch 41c is turned on, interlocking with which an electromagnetic valve 76 (see FIG. 2), which is described below, is energized. As a result, the operator operates the predetermined operation lever 41b1, making it possible to drive the predetermined hydraulic actuator 73. On the other hand, when the operator pulls up the cutoff lever 41b2, the cutoff switch 41c is turned off, interlocking with which the electromagnetic valve 76 is de-energized to be cut off. In this case, even if the operator operates the operation lever 41b1, the hydraulic actuator 73 cannot be driven. From this, it can be said that the cutoff switch 41c (or cutoff lever 41b2) constitutes a drive regulation unit 90 that regulates drive of the hydraulic excavator 1. In other words, the hydraulic excavator 1 includes the drive regulation unit 90 (e.g., cutoff switch 41c) that regulates the drive of the hydraulic excavator 1. When intending to get out of the steering part 41, the operator pulls up the cutoff lever 41b2 thereby to disable the hydraulic actuator 73, and then leaves the operator's seat 41a.

A first battery 53 is mounted on the upper swivel body 4. The first battery 53 includes a lithium-ion battery, for example, and outputs a higher voltage than a second battery 54 (see FIG. 2) described below. Electric power supplied from the first battery 53 can drive the electric motor 61. Further, the upper swivel body 4 is provided with a power feed port, which is not illustrated in the figure. The above power feed port and an external power source 51 are connected via a power feed cable 52. This also allows the first battery 53 to be charged.

Further, when the lower traveling body 2, the work machine 3, and the upper swivel body 4 are collectively defined as a machine body BA, the machine body BA may be driven by a combination of power-driven equipment and hydraulic equipment. That is, the machine body BA may include an electric traveling motor, an electric cylinder, an electric swivel motor, etc., other than the hydraulic equipment such as the hydraulic actuators 73. The machine body BA may be driven only by electric power (all-electric), without the hydraulic equipment.

### [2. Configuration of Control and Hydraulic Systems]

FIG. 2 is a block diagram schematically illustrating a configuration of control and hydraulic systems of the hydraulic excavator 1. In FIG. 2, arrows shown in dashed lines indicate transmission paths of detection signals. The hydraulic excavator 1 includes the electric motor 61. The electric motor 61 is driven by electric power supplied from at least one of the external power source 51 (see FIG. 1) and the first battery 53 via an inverter 63 to be described below.

The hydraulic excavator 1 includes a power feeder 62, the inverter 63, a converter 64, and a drive switch 65.

The power feeder 62 converts an AC voltage supplied from the external power source 51 via the power feed cable 52 (see FIG. 1) into a DC voltage. The DC voltage (electric power) output from the power feeder 62 is supplied to the inverter 63 or the first battery 53. The electric power is supplied from the external power source 51 to the first battery 53 via the power feeder 62, thereby charging the first battery 53. In other words, the hydraulic excavator 1 includes the power feeder 62 that supplies electric power supplied from the external power source 51 to the first battery 53.

The inverter 63 converts the DC voltage output from the power feeder 62 or a DC voltage supplied from the first battery 53 into an AC voltage and supplies the AC voltage to the electric motor 61. As a result, the electric motor 61 is rotated. The supply of the AC voltage (current) from the inverter 63 to the electric motor 61 is performed based on a rotation command (control signal) output from the ECU 80 to be described below.

The converter 64 converts a high-voltage (e.g., 300 V) DC voltage supplied from the power feeder 62 or the first battery 53 into a low-voltage (e.g., 12 V) DC voltage. The converter 64 supplies electric power to, for example, a pump (not shown) that circulates cooling water for cooling the electric motor 61.

The drive switch 65 is a key switch that detects a turning position of a key inserted into a key cylinder by an operator. Information on the turning position of the key, which is detected by the drive switch 65, is output to an ECU 80. The drive switch 65 and the ECU 80 are supplied with electric power from the second battery 54. The second battery 54 includes a lead battery that outputs a low voltage of, for example, 12 V.

Here, as the turning position of the key detected by the drive switch 65, there are a first position, a second position, and a third position. The first position is a position (on position) at which electric power from the second battery 54 is supplied to the ECU 80 and electrical components. The second position is a position (start position) at which the electric motor 61 is started. The third position is a position (off position) at which the supply of electric power to the ECU 80 is cut off and the electric motor 61 is stopped. When the operator turns the key in the order of the third position, the first position, and the second position, the electric motor 61 is started. After the electric motor 61 is started, the key is returned from the second position to the first position. The operator turns the key from the first position to the third position, thereby stopping the electric motor 61.

Note that, in the present embodiment, the drive switch 65 detects an instruction by the operator to start or stop the electric motor 61 by detecting the turning position of the key, but may be configured to detect the instruction by the operator to start or stop the electric motor 61 by detecting the number of times of pressing the push-type button or pressing time of the push-type button. For example, when the operator presses the button for a long time in a state where the cutoff lever 41b2 is raised, an instruction by the operator to start the electric motor 61 may be detected, and thereafter, when the operator presses the button for a short time, an instruction to stop the electric motor 61 may be detected.

Thus, the hydraulic excavator 1 of the present embodiment includes the drive switch 65 that detects an instruction to start or stop the electric motor 61 (according to the turning of the key or the pressing operation of the button).

The hydraulic excavator 1 also includes a notification unit 66. The notification unit 66 makes a notification about the starting of the electric motor 61. The notification unit 66 includes a warning sound output unit 66a and a visual information presentation unit 66b. The warning sound output unit 66a includes, for example, a buzzer, and outputs a warning sound (buzzer sound).

The visual information presentation unit 66b presents visual information regarding the starting of the electric motor 61. Such visual information presentation unit 66b includes a warning lamp 66b1. Although the warning lamp 66b1 is configured by, for example, a rotating lamp (revolving light), the warning lamp 66b1 may be configured by a lamp that only lights or blinks without rotating. As illustrated in FIG. 1, the warning lamp 66b1 is installed on, for example, a frame that supports a ceiling surface of the operator's seat 41a, but the installation position of the warning lamp 66b1 is not particularly limited.

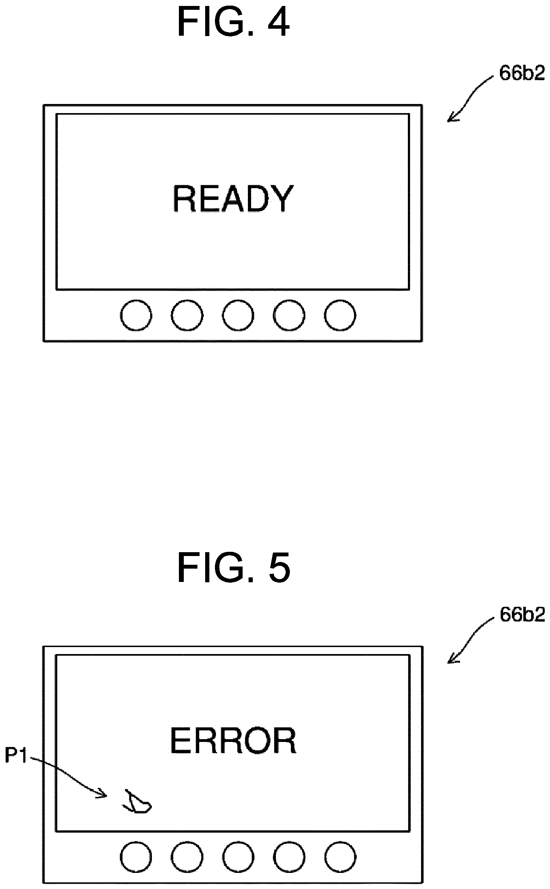

The visual information presentation unit 66b further includes a display unit 66b2. In other words, the notification unit 66 includes the display unit 66b2. The display unit 66b2 includes, for example, a liquid crystal display device, and displays a screen (see FIG. 4) indicating that the electric motor 61 has been started. The display unit 66b2 is installed next to the operator's seat 41a, for example.

The lighting (blinking) of the warning lamp 66b1 or the screen display on the display unit 66b2 can visually present information regarding the starting of the electric motor 61 to the operator or the surrounding workers. In other words, the above visual information presented by the visual information presentation unit 66b includes optical information by lighting (blinking) the warning lamp 66b1 and display information of the display unit 66b2. The information regarding the starting of the electric motor 61 includes at least one of information indicating that the electric motor 61 has already been started and information indicating that the electric motor 61 is to be started (advance notice of starting).

As described above, the notification unit 66 includes the warning sound output unit 66a that outputs a warning sound. The notification unit 66 also includes the visual information presentation unit 66b that presents visual information regarding the starting of the electric motor 61.

The hydraulic excavator 1 also includes a charging mode setting switch 67. The charging mode setting switch 67 is installed, for example, next to the operator's seat 41a, and is pressed when the operator sets the charging mode. The charging mode is a mode in which the first battery 53 is charged by supplying electric power supplied from the external power source 51 to the first battery 53 via the power feeder 62. The charging mode setting switch 67 functions as a charging mode setting detection unit that detects, as an operating state of the hydraulic excavator 1, whether or not a drive mode of the hydraulic excavator 1 is set to the charging mode for charging the first battery 53.

A pilot pump 70 and the plurality of hydraulic pumps 71 are connected to a rotary shaft (output shaft) of the electric motor 61. The pilot pump 70 discharges pilot oil which serves as an input command to a control valve 72. The control valve 72 is a direction switching valve that controls a flow direction and a flow rate of pressure oil supplied from the hydraulic pump 71 to the hydraulic actuators 73, and is provided corresponding to each of the hydraulic actuators 73.

The plurality of hydraulic pumps 71 include a variable displacement pump and a fixed displacement pump. In FIG. 2, only one hydraulic pump 71 is illustrated as an example. The hydraulic pump 71 supplies hydraulic oil in a hydraulic oil tank (not shown) as pressure oil to the hydraulic actuator 73 via the control valve 72. As a result, the hydraulic actuator 73 is driven.

The hydraulic excavator 1 further includes a remote control valve 75 and the electromagnetic valve 76. The remote control valve 75 is provided to switch the direction and pressure of the pilot oil supplied from the pilot pump 70 to the control valve 72. The remote control valve 75 is included in an operation lever 41b1 and reduces the pressure (pilot pressure) of the pilot oil supplied from the pilot pump 70 according to the operation direction and operation amount of the operation lever 41b1, thereby to generate a pilot secondary pressure.

The electromagnetic valve 76 is positioned in an oil path between the pilot pump 70 and the remote control valve 75, and controls the supply of the pilot oil (pilot pressure) from the pilot pump 70 to the remote control valve 75.

The hydraulic excavator 1 further includes an Electronic Control Unit (ECU) 80. The ECU 80 is a controller that controls each part of the hydraulic excavator 1, and includes, for example, a Central Processing Unit (CPU), a storage unit, and the like. In particular, the ECU 80 has a determination unit 80a and a notification control unit 80b in addition to a main control unit (not shown) that generates a rotation command of the electric motor 61 and supplies the rotation command to the inverter 63.

The determination unit 80a determines whether or not the electric motor 61 is able to be started based on the operating state of the hydraulic excavator 1. Here, the operating state of the hydraulic excavator 1 is, for example, a detection state (on or off) of the cutoff switch 41c.

The notification control unit 80b controls the notification unit 66 based on the determination result of the determination unit 80a. In other words, the notification control unit 80b controls the warning sound output unit 66a and the visual information presentation unit 66b based on the determination result of the determination unit 80a.

The hydraulic excavator 1 of the present embodiment may include an abnormality detection unit 91, details of which will be described below. Hereinafter, details of the notification control in the ECU 80 will be described.

### [3. Details of Notification Control]

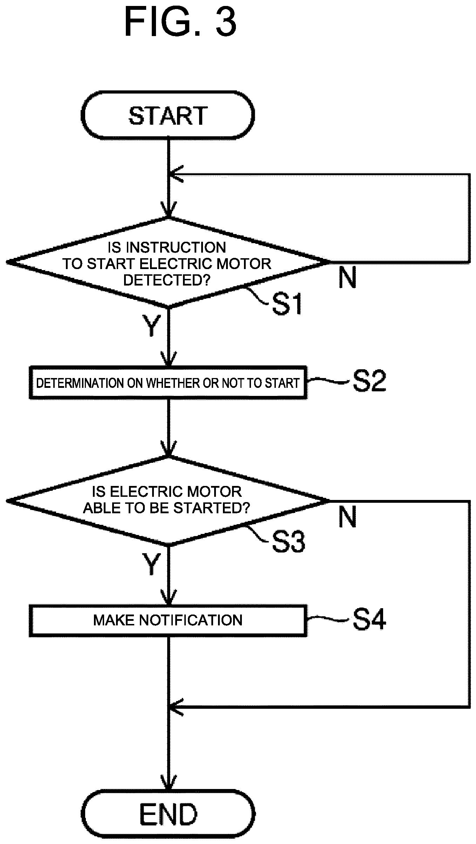

FIG. 3 is a flowchart illustrating an operation flow when the notification unit 66 is controlled by the ECU 80. First, when the drive switch 65 detects an instruction to start the electric motor 61 based on the key operation or the button pressing operation of the operator (Yes in S1), the determination unit 80a of the ECU 80 determines whether or not the electric motor 61 is able to be started based on the operation state of the hydraulic excavator 1 (S2).

For example, when the cutoff switch 41c is off, that is, when the drive regulation unit 90 regulates the drive of the hydraulic excavator 1, the determination unit 80a determines that the electric motor 61 is able to be started. On the other hand, when the cutoff switch 41c is on, that is, when the drive regulation unit 90 releases the regulation of the drive of the hydraulic excavator 1, the determination unit 80a determines that the electric motor 61 is unable to be started.

When it is determined that the electric motor 61 is unable to be started (No in S3), the notification control unit 80b terminates the notification control without having the notification unit 66 make a notification about the starting of the electric motor 61. On the other hand, when it is determined that the electric motor 61 is able to be started (Yes in S3), the notification control unit 80b causes the notification unit 66 to make a notification about the starting of the electric motor 61 (S4). For example, the notification control unit 80b causes the buzzer sound to be output from the warning sound output unit 66a or the warning lamp 66b1 of the visual information presentation unit 66b to light (or blink). The notification control unit 80b may cause the buzzer sound to be output from the warning sound output unit 66a and simultaneously cause the warning lamp 66b1 to light (or blink).

FIG. 4 schematically illustrates an example of the display screen of the display unit 66b2 of the visual information presentation unit 66b. In S4, the notification control unit 80b may display visual information (the word "READY" in the example in the same figure), on the display screen of the display unit 66b2, to the effect that the electric motor 61 is able to be started. The display of visual information in display unit 66b2 may be performed simultaneously with at least one of the output of warning sound from the warning sound output unit 66a and the lighting of the warning lamp 66b1, or may be performed independently.

When a predetermined time has elapsed since the notification by the notification unit 66 is made, the notification control unit 80b terminates the execution of the notification by the notification unit 66 and ends the series of notification control.

In addition, when the electric motor 61 is able to be started, the timing at which the electric motor 61 is actually started after the drive switch 65 detects an instruction to start the electric motor 61 in S1 may be before or after the notification is made by the notification unit 66. In the former case, the fact that the electric motor 61 has been started can be notified to the operator and others by the notification unit 66. In the latter case, on the other hand, the notification by the notification unit 66 is to inform the operator and others that the electric motor 61 is about to be started, that is, the notification is an advance notice about the starting of the electric motor 61.

As described above, when the drive switch 65 detects an instruction to start the electric motor 61 (Yes in S1), and in a case where the determination unit 80a determines that the electric motor 61 is able to be started (Yes in S3), the notification control unit 80b causes the notification unit 66 to make a notification (about the starting of the electric motor 61) (S4).

According to the above control, even when the operator and others hardly notice the driving sound of the electric motor 61 because the driving sound of the electric motor 61 is silent, the operator and others can be made to recognize the starting of the electric motor 61 by the notification of the notification unit 66. As a result, the operator and others can sense that the electric motor 61 is started and the hydraulic excavator 1 may move, and can take action to avoid danger. In addition, depending on the operating states of the hydraulic excavator 1 (e.g., when the cutoff switch 41c is on), the electric motor 61 may be unable to be started. However, the determination unit 80a determines whether or not the electric motor 61 is able to be started based on the operating state of the hydraulic excavator 1, and the notification unit 66 makes a notification when determining that the starting is possible. This enables the notification unit 66 to make a notification only when the electric motor 61 is able to be started, thereby making the operator and others recognize the starting of the electric motor 61. In other words, even when the drive switch 65 detects an instruction to start the electric motor 61, in a case where the electric motor 61 is unable to be started, the electric motor 61 is not to be started, so that the unnecessary notification made by the notification unit 66 about the starting of the electric motor 61 can be eliminated.

In S2, the determination unit 80a determines that the electric motor 61 is unable to be started when, as the operating state of the hydraulic excavator 1, the drive regulation unit 90 (cutoff switch 41c) releases the regulation of the drive of the hydraulic excavator 1 (e.g., hydraulic actuator 73).

In a case where the electric motor 61 is started when the drive regulation of the hydraulic excavator 1 is released, the hydraulic excavator 1 (e.g., hydraulic actuator 73) may immediately start moving in response to the operation of the operation lever 41b1, which is dangerous. Therefore, when the drive regulation of the hydraulic excavator 1 is released, even though the drive switch 65 detects an instruction to start the electric motor 61, control is performed by the ECU 80 not to start the electric motor 61 (start restraining function). In this case, since the electric motor 61 is not started, it is unnecessary to have the notification by the notification unit 66 about the starting of the electric motor 61 made. Therefore, when the drive regulation of the hydraulic excavator 1 is released, the determination unit 80a determines that the electric motor 61 is unable to be started, thereby preventing the notification unit 66 from making the notification and thus eliminating unnecessary notifications by the notification unit 66.

Furthermore, in S2, the determination unit 80a determines that the electric motor 61 is able to be started when, as the operating state of the hydraulic excavator 1, the drive regulation unit 90 (cutoff switch 41c) regulates the drive of the hydraulic excavator 1.

When the drive of the hydraulic excavator 1 is regulated, even though the electric motor 61 is started and the operation lever 41b1 is operated, the hydraulic actuator 73 does not start moving immediately. As a result, when the drive switch 65 detects an instruction to start the electric motor 61, the electric motor 61 is started. Therefore, in this case, it is necessary to have the notification by the notification unit 66 about the starting of the electric motor 61 made. In a state where the drive of the hydraulic excavator 1 is regulated, the determination unit 80a determines that the electric motor 61 is able to be started, thereby causing the notification unit 66 to make a notification, so that the operator and others can recognize the starting of the electric motor 61.

Furthermore, in S4, the warning sound output unit 66a outputs a warning sound (e.g., a buzzer sound), thereby enabling the operator and others to reliably recognize the starting of the electric motor 61.

Moreover, in S4, the visual information presentation unit 66b (warning lamp 66b1, display unit 66b2) presents visual information, thereby enabling the operator and others to reliably recognize the starting of the electric motor 61.

### [4. Determination on Whether or Not Electric Motor Is Able to Be Started Based on Abnormality Detection]

The hydraulic excavator 1 of the present embodiment may include an abnormality detection unit 91. The abnormality detection unit 91 detects presence or absence of an abnormality in the hydraulic excavator 1 as an operating state of the hydraulic excavator 1. In the determination on whether or not the electric motor is able to be started in S2, the determination unit 80a described above may determine that the electric motor 61 is unable to be started when the abnormality detection unit 91 detects the presence of an abnormality in the hydraulic excavator 1.

The abnormality detection unit 91 can be composed of a Battery Management Unit (BMU) that collects, for example, voltage (state of charge) and temperature information of a plurality of battery cells constituting the first battery 53 and determines whether the first battery 53 is normal or abnormal.

More specifically, the first battery 53 includes a plurality of battery modules. Each battery module includes a plurality of cells. Voltage and temperature information for each cell is collected by a Cell Management Unit (CMU). The information collected at the CMUs of each battery module is then aggregated at the BMU. This enables the BMU to determine whether the first battery 53 is normal or abnormal based on the aggregated information.

When an abnormality is present in the hydraulic excavator 1, the electric motor 61 is not started because safety is not ensured by starting the electric motor 61. In other words, a main control unit of the ECU 80 does not output a rotation command that starts the electric motor 61 to the inverter 63. When the electric motor 61 is not started, it is unnecessary to have the notification by the notification unit 66 about the starting of the electric motor 61 made. Therefore, when an abnormality is present in the hydraulic excavator 1, the determination unit 80a determines that the electric motor 61 is unable to be started, thereby enabling the notification control unit 80b to prevent the notification unit 66 from making a notification, which eliminates unnecessary notifications by the notification unit 66.

On the other hand, in the determination on whether or not the electric motor is able to be started in S2, the determination unit 80a may determine that the electric motor 61 is able to be started when the abnormality detection unit 91 detects the absence of an abnormality in the hydraulic excavator 1.

When no abnormality is present in the hydraulic excavator 1, the safety of the hydraulic excavator 1 is ensured. As a result, when the drive switch 65 detects an instruction to start the electric motor 61, the main control unit of the ECU 80 causes the electric motor 61 to be started by outputting a rotation command that starts the electric motor 61 to the inverter 63. Therefore, when the abnormality detection unit 91 detects the absence of an abnormality in the hydraulic excavator 1, the determination unit 80a determines that the electric motor 61 is able to be started, thereby enabling the notification control unit 80b to have the notification unit 66 make a notification based on the determination result of the determination unit 80a. The above notification enables operator and others to recognize the starting of the electric motor 61.

The abnormality detection unit 91 described above is not limited to the BMU described above and can, for example, include sensors that detect abnormalities related to temperature, voltage, communication, etc. in various parts of the hydraulic excavator 1. For example, the inverter 63 is provided with sensors that detect abnormalities in communication with the ECU 80, abnormalities in the internal ECU of the inverter 63, etc., in addition to abnormalities in the temperature, voltage, and current of the inverter 63, and such sensors can also constitute the abnormality detection unit 91. The electric motor 61 is also provided with sensors that detect abnormal temperature and abnormal rotation of the electric motor 61, etc. Such sensors can also constitute the abnormality detection unit 91.

In a case where the abnormality detection unit 91 includes a plurality of sensors, when an abnormality is detected by any one of the sensors, the determination unit 80a can determine that the electric motor 61 is unable to be started, and when no abnormality is detected by all the sensors, the determination unit 80a can determine that the electric motor 61 is able to be started.

### [5. Determination on Whether or Not Electric Motor Is Able to Be Started Based on Drive Mode]

The determination unit 80a may determine that the electric motor 61 is unable to be started when the charging mode setting switch 67 (see FIG. 2) detects setting of the charging mode in S2 in FIG. 3.

In charging mode, electric power is supplied from the external power source 51 to the first battery 53 via the power feeder 62 to charge the first battery 53. The electric motor 61 is not driven while the first battery 53 is charged. In other words, the main control unit of the ECU 80 does not output a rotation command that starts the electric motor 61 to the inverter 63. When the electric motor 61 is not started, it is unnecessary to have the notification by the notification unit 66 about the starting of the electric motor 61 made. Therefore, when the charging mode setting switch 67 detects the setting of the charging mode, the determination unit 80a determines that the electric motor 61 is unable to be started, thereby enabling the notification control unit 80b to prevent the notification unit 66 from making a notification, which eliminates unnecessary notifications by the notification unit 66.

The drive mode of the hydraulic excavator 1 may include an external power source mode in addition to the charging mode. The external power source mode is a drive mode in which, when the electric motor 61 is driven, electric power supplied from the external power source 51 is supplied to the inverter 63 via the power feeder 62 to directly consume the above electric power. At this time, the determination unit 80a may determine, when the drive mode is determined to be the external power source mode based on the detection result in the charging mode setting switch 67, that the electric motor 61 is able to be started.

In the external power source mode, the electric power supplied from the external power source 51 is directly used to drive the electric motor 61. Whether or not the drive mode of the hydraulic excavator 1 is the external power source mode can be determined by the determination unit 80a based on the detection result in the charging mode setting switch 67. For example, when the charging mode setting switch 67 detects the setting of the charging mode, the drive mode can be determined to be the charging mode but not the external power source mode, and conversely, when the charging mode setting switch 67 does not detect the setting of the charging mode, the drive mode can be determined to be the external power source mode but not the charging mode.

The determination unit 80a determines that the electric motor 61 is able to be started when the drive mode is determined to be the external power source mode, which enables the notification control unit 80b to cause the notification unit 66 to make a notification based on the determination result of the determination unit 80a. The above notification enables operator and others to recognize the starting of the electric motor 61.

Incidentally, in the determination on whether or not the electric motor is able to be started in S2 in FIG. 3, when the determination unit 80a determines that the electric motor 61 is unable to be started, the notification control unit 80b may, before the notification control is terminated, cause the display unit 66b2 to display information indicating a cause why the electric motor 61 is unable to be started.

FIG. 5 illustrates an example of the display screen of the display unit 66b2 when the determination unit 80a determines that the electric motor 61 motor is unable to be started. In FIG. 5, an icon P1 indicating a state in which the cutoff lever 41b2 is turned to the down position is displayed on the display unit 66b2. This icon display indicates that since the cutoff lever 41b2 is turned to the downward position, the cutoff switch 41c is turned on and the drive regulation of the hydraulic excavator 1 is released, which causes the determination unit 80a to determine that the electric motor 61 is unable to be started.

As described above, by displaying the information (e.g., icon P1) that causes the electric motor 61 to be unable to be started on display unit 66b2, the operator and others can immediately and easily recognize the cause why the electric motor 61 is unable to be started (e.g., the cutoff switch 41c is turned on) by viewing the information displayed on display unit 66b2. operator and others can then check or inspect as necessary.

### [6. Transition Examples of Display Screen of Display Unit]

As described above, the abnormality detection unit 91 illustrated in FIG. 2 can collect information regarding voltages of the plurality of battery cells constituting the first battery 53. This enables the abnormality detection unit 91 to detect residual capacity of electric power of the first battery 53 (battery residual capacity).

As described above, in a configuration where the hydraulic excavator 1 includes the first battery 53 that stores electric power to drive the electric motor 61 and the abnormality detection unit 91 as a residual capacity detection unit that detects the residual capacity of electric power of the first battery 53, the display unit 66b2 can, according to the state of the hydraulic excavator 1, switch the display screens as follows.

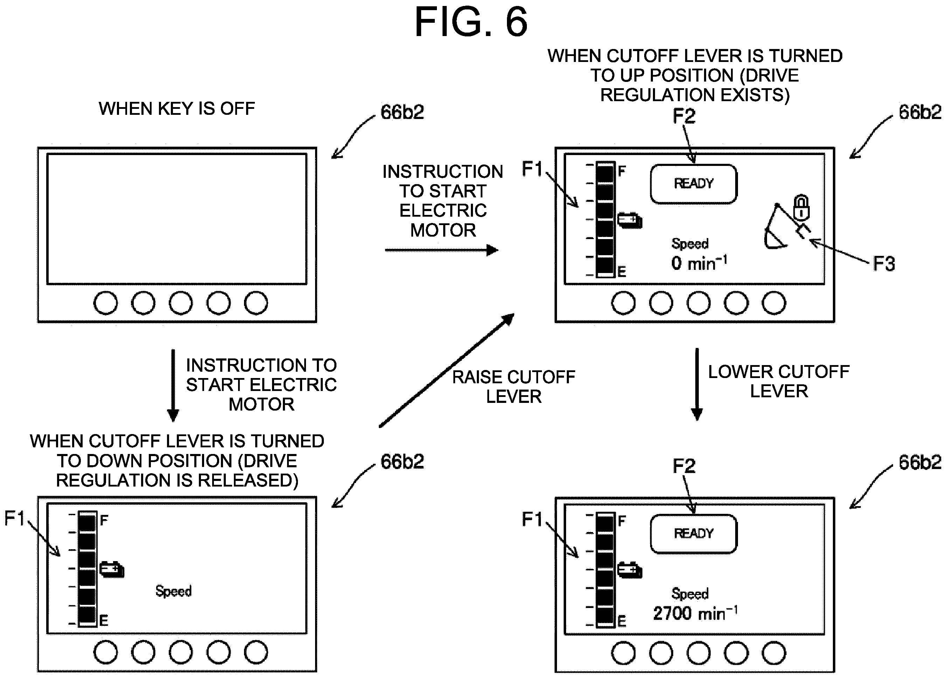

FIG. 6 illustrates an example of display screen transitions of the display unit 66b2. When the operator gives an instruction to start the electric motor 61 by turning the key, in a case where the cutoff lever 41b2 is turned downward, the cutoff switch 41c is turned on and the drive regulation of the hydraulic excavator 1 by the drive regulation unit 90 becomes released. In this case, as described above, the determination unit 80a determines that the electric motor 61 is unable to be started, so the display screen of the display unit 66b2 transitions from the upper left drawing to the lower left drawing in FIG. 6. In other words, visual information (e.g., the word "READY") to the effect that the electric motor 61 is able to be started is not displayed on the display unit 66b2 (the visual information is hidden). Moreover, since the drive regulation of the hydraulic excavator 1 is released, the regulation information indicating that the drive of the hydraulic excavator 1 is regulated is also hidden on the display unit 66b2 (the regulation information is hidden). Residual capacity information F1, which indicates the residual capacity of electric power of the first battery 53, is displayed on the display unit 66b2.

On the other hand, when the operator gives an instruction to start the electric motor 61 by turning the key, in a case where the cutoff lever 41b2 is turned upward, the cutoff switch 41c is turned off and the drive of the hydraulic excavator 1 becomes regulated by the drive regulation unit 90. In this case, as described above, the determination unit 80a determines that the electric motor 61 is able to be started, so the display screen of the display unit 66b2 transitions from the upper left drawing to the upper right drawing in FIG. 6. In other words, visual information F2 (e.g., the word "READY") to the effect that the electric motor 61 is able to be started is displayed alongside (or adjacent to) the residual capacity information F1 on the display unit 66b2. Moreover, since the drive of the hydraulic excavator 1 is regulated, the display unit 66b2 also displays regulation information F3 indicating that the drive of the hydraulic excavator 1 is regulated. In addition, when the instruction to start the electric motor 61 is given, the cutoff lever 41b2 is turned downward, and from there, in a case where the cutoff lever 41b2 is turned upward, the display screen of display unit 66b2 transitions from the lower left drawing to the upper right drawing in FIG. 6.

When the electric motor 61 is started and the operator turns the cutoff lever 41b2 downward, the cutoff switch 41c is turned on and the drive regulation of the hydraulic excavator 1 by the drive regulation unit 90 becomes released. As a result, the operator can operate the various levers 41b to drive the hydraulic excavator 1 to perform work. The operation of turning the cutoff lever 41b2 downward releases the drive regulation of the hydraulic excavator 1, so the display screen of display unit 66b2 transitions from the upper right drawing to the lower right drawing in FIG. 6. In other words, the displayed regulation information F3 is hidden on the display unit 66b2.

As described above, the visual information presentation unit 66b includes the display unit 66b2 as an information display unit. The display unit 66b2 then displays, according to the state of the drive regulation unit 90, the residual capacity information F1 that indicates the residual capacity of electric power, and the visual information F2 regarding the starting of the electric motor 61 (see the upper right drawing in FIG. 6). As a result, the operator can recognize, by viewing the display screen of the display unit 66b2, that the electric motor 61 is in a state of being able to be started, together with the residual capacity of electric power of the first battery 53 at that time.

The display unit 66b2 also displays the residual capacity information F1 and the visual information F2 side by side (see the upper right drawing in FIG. 6). As a result, the operator can immediately and simultaneously recognize these pieces of information on the display screen of the display unit 66b2 with less visual line movement.

When the drive of the hydraulic excavator 1 is regulated by the drive regulation unit 90, the display unit 66b2 displays the regulation information F3 indicating that the drive is regulated (see the upper right drawing in FIG. 6). As a result, the operator can recognize, by viewing the display screen of the display unit 66b2, that the drive of the hydraulic excavator 1 is regulated and that there is no problem with starting the electric motor 61 (e.g., the hydraulic excavator 1 does not start moving immediately).

In addition, the display unit 66b2 hides the visual information F2 and the regulation information F3 when the drive regulation of the hydraulic excavator 1 by the drive regulation unit 90 is released before the electric motor 61 is started (see the lower left drawing in FIG. 6). As a result, the operator can simultaneously recognize, by viewing the display screen of the display unit 66b2, that the electric motor 61 is not in a state of being able to be started and that the drive regulation of the hydraulic excavator 1 is released.

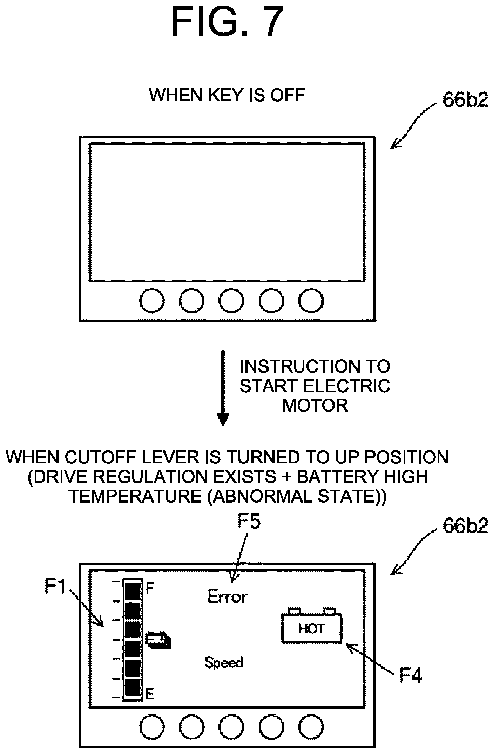

FIG. 7 illustrates another example of a display screen transition in the display unit 66b2. When the operator gives an instruction to start the electric motor 61 by turning the key, in a state where the cutoff lever 41b2 is turned upward, that is, in a state where the drive of the hydraulic excavator 1 is regulated by the drive regulation unit 90, and in a case where the abnormality detection unit 91 detects the presence of an abnormality in the hydraulic excavator 1, the determination unit 80a determines that the electric motor 61 is unable to be started. In this case, the display unit 66b2 may display abnormality information F4 indicating the presence of an abnormality in the hydraulic excavator 1. The same figure illustrates an example in which the abnormality detection unit 91 detects that the first battery 53 has become hot and the display unit 66b2 displays the abnormality information F4 indicating that the first battery 53 has become hot. At this time, since the electric motor 61 is determined to be unable to be started, visual information regarding the starting of the electric motor 61 is not displayed (is hidden) on the display unit 66b2, and starting impossible information F5 (the word "Error") indicating that starting is impossible is displayed.

As described above, when the abnormality detection unit 91 detects the presence of an abnormality in the hydraulic excavator 1, the display unit 66b2 as the information display unit displays the abnormality information F4 indicating the presence of the abnormality. As a result, the operator can immediately recognize that an abnormality has occurred in the hydraulic excavator 1 by viewing the display screen of the display unit 66b2.

The display unit 66b2 also hides the visual information regarding the starting of the electric motor 61 when the abnormality detection unit 91 detects the presence of an abnormality in the hydraulic excavator 1. As a result, the operator can immediately recognize that the electric motor 61 is not in a state of being able to be started by viewing the display screen of the display unit 66b2.

The abnormality information F4 is information indicating, for example, that the first battery 53 reaches high temperature, which is also information indicating the cause why the electric motor 61 is unable to be started. By displaying such abnormality information F4 on the display unit 66b2, the operator can immediately recognize the cause why the electric motor 61 is unable to be started by viewing the display screen of the display unit 66b2 and immediately take necessary measures such as checking and inspecting.

Although description has been made using the hydraulic excavator that is a construction machine as an example of an electric work machine, the work machine is not limited to the hydraulic excavator, but may be some other construction machine, such as a wheel loader or the like, and may be an agricultural machine, such as a combine harvester, a tractor, or the like.

Although the embodiment of the present invention has been described above, the scope of the invention is not limited thereto, and can be expanded or modified without deviating from the gist of the present invention.

### INDUSTRIAL APPLICABILITY

The present invention is applicable to work machines such as a construction machine and an agricultural machine, for example.

### DESCRIPTION OF REFERENCE NUMERALS

1 Hydraulic excavator (electric work machine)
41c Cutoff switch (drive regulation unit)
51 External power source
53 First battery
61 Electric motor
62 Power feeder
61a Rotational speed sensor
65 Drive switch
66 Notification unit
66a Warning sound output unit
66b Visual information presentation unit
66b2 Display unit (information display unit)
67 Charging mode setting switch (charging mode setting detection unit)
80a Determination unit
80b Notification control unit
90 Drive regulation unit
91 Abnormality detection unit (residual capacity detection unit)
F1 Residual capacity information
F2 Visual information
F3 Regulation information
F4 Abnormality information

## Claims

1. An electric work machine having an electric motor, the electric work machine comprising:
a drive switch that detects an instruction to start or stop the electric motor;
a notification unit that makes a notification about starting of the electric motor;
a determination unit that determines whether or not the electric motor is able to be started based on an operating state of the electric work machine; and
a notification control unit that controls the notification unit based on a determination result of the determination unit,
wherein when the drive switch detects the instruction to start the electric motor, and in a case where the determination unit determines that the electric motor is able to be started, the notification control unit causes the notification unit to make the notification.

2. The electric work machine according to claim 1, further comprising:
a drive regulation unit that regulates drive of the electric work machine,
wherein the determination unit determines that the electric motor is unable to be started when, as the operating state, the drive regulation unit releases regulation of the drive of the electric work machine.

3. The electric work machine according to claim 2, wherein
the determination unit determines that the electric motor is able to be started when, as the operating state, the drive regulation unit regulates the drive of the electric work machine.

4. The electric work machine according to any one of claims 1 to 3, further comprising:
an abnormality detection unit that detects presence or absence of an abnormality in the electric work machine as the operating state,
wherein when the abnormality detection unit detects the presence of an abnormality in the electric work machine, the determination unit determines that the electric motor is unable to be started.

5. The electric work machine according to claim 4, wherein
when the abnormality detection unit detects the absence of an abnormality in the electric work machine, the determination unit determines that the electric motor is able to be started.

6. The electric work machine according to any one of claims 1 to 5, further comprising:
a power feeder that supplies electric power supplied from an external power source to a battery; and
a charging mode setting detection unit that detects, as the operating state of the electric work machine, whether or not a drive mode of the electric work machine is set to a charging mode for charging the battery,
wherein the determination unit determines that the electric motor is unable to be started when the charging mode setting detection unit detects setting of the charging mode.

7. The electric work machine according to claim 6, wherein
the drive mode includes an external power source mode in which, when the electric motor is driven, electric power supplied from the external power source is directly consumed, and
the determination unit determines, when the drive mode is determined to be the external power source mode based on a detection result in the charging mode setting detection unit, that the electric motor is able to be started.

8. The electric work machine according to any one of claims 1 to 7, wherein
the notification unit includes a warning sound output unit that outputs a warning sound.

9. The electric work machine according to any one of claims 1 to 8, wherein
the notification unit includes a visual information presentation unit that presents visual information regarding the starting of the electric motor.

10. The electric work machine according to claim 9, further comprising:
a battery that stores electric power to drive the electric motor; and
a residual capacity detection unit that detects residual capacity of electric power of the battery,
wherein the visual information presentation unit includes an information display unit, and
the information display unit displays residual capacity information that indicates the residual capacity of electric power and the visual information.

11. The electric work machine according to claim 10, wherein
the information display unit displays the residual capacity information and the visual information side by side.

12. The electric work machine according to claim 2, wherein
the notification unit includes a visual information presentation unit that presents visual information regarding the starting of the electric motor,
the visual information presentation unit includes an information display unit, and
the information display unit displays, when the drive of the electric work machine is regulated by the drive regulation unit, regulation information indicating that the drive is regulated.

13. The electric work machine according to claim 12, wherein
the information display unit hides the visual information and the regulation information when drive regulation of the electric work machine by the drive regulation unit is released.

14. The electric work machine according to claim 4, wherein
the notification unit includes a visual information presentation unit that presents visual information regarding the starting of the electric motor,
the visual information presentation unit includes an information display unit, and
the information display unit displays, when the abnormality detection unit detects the presence of an abnormality in the electric work machine, abnormality information indicating the presence of an abnormality.

15. The electric work machine according to claim 14, wherein
the information display unit hides the visual information when the abnormality detection unit detects the presence of an abnormality in the electric work machine.

16. The electric work machine according to claim 14 or 15, wherein
the abnormality information is information indicating a cause why the electric motor is unable to be started.

17. The electric work machine according to any one of claims 1 to 16, wherein
the notification unit includes a display unit, and
when the determination unit determines that the electric motor is unable to be started, the notification control unit causes the display unit to display information indicating the cause why the electric motor is unable to be started.
